# EUROPÄISCHE PATENTSCHRIFT

(11) **EP 2 546 432 B1**
(45) Veröffentlichungstag und Bekanntmachung des Hinweises auf die Patenterteilung: **20.04.2016**
(21) Anmeldenummer: 11173406.7
(22) Anmeldetag: 11.07.2011
(51) Int. Cl.: E04C 3/29, B23Q 1/01, B29C 63/34, B29L 31/00

(54) **Verfahren und Vorrichtung zum Versteifen eines Hohlprofils, insbesondere des äußeren Hohlprofils eines Führungsträgers für eine Bewegungseinheit einer Werkzeugmaschine**
Machine and device for stiffening a hollow profile, in particular the external hollow profile of a guide holder for a motion unit of a tooling machine
Procédé et dispositif de raidissement d'un profilé creux, notamment du profilé creux extérieur d'un support de guidage pour une unité de déplacement d'une machine-outil

(43) Veröffentlichungstag der Anmeldung: 16.01.2013
(73) Patentinhaber: Trumpf Sachsen GmbH, 01904 Neukirch (DE)
(72) Erfinder: Harnisch, Gunter, 01936 Königsbrück (DE); Knobel, Carsten, 02689 Sohland (DE); Schütze, Eckart, 46286 Dorsten (DE)
(74) Vertreter: Kohler Schmid Möbus Patentanwälte

(56) Entgegenhaltungen:
- EP-A- 1 231 391
- FR-A1- 2 797 313
- GB-A- 2 059 546
- US-A- 4 348 247

## Beschreibung

Die Erfindung betrifft ein Verfahren zum Versteifen eines Hohlprofils mittels eines sich im Innern des Hohlprofils in dessen Längsrichtung erstreckenden Kunststoffstabes aus einem verfestigtem faserverstärkten Kunststoff,
- wobei ein Stabrohling des Kunststoffstabes mit noch unverfestigtem faserverstärktem Kunststoff und mit einem übergroßen Rohlingsquerschnitt hergestellt wird, der sich in der senkrechten Projektion auf den freien Hohlprofilquerschnitt über den freien Hohlprofilquerschnitt hinaus erstreckt und der elastisch komprimierbar und nach dem elastischen Komprimieren elastisch expandierbar ist,
- wobei der übergroße Rohlingsquerschnitt des Stabrohlings außerhalb des Hohlprofils elastisch auf einen komprimierten Rohlingsquerschnitt komprimiert wird, der in der senkrechten Projektion auf den freien Hohlprofilquerschnitt mit dem freien Hohlprofilquerschnitt deckungsgleich ist oder innerhalb des freien Hohlprofilquerschnittes liegt,
- wobei der Stabrohling mit komprimiertem Rohlingsquerschnitt innerhalb des freien Hohlprofilquerschnittes im Innern des Hohlprofils angeordnet wird und
- wobei sich der im Innern des Hohlprofils angeordnete Stabrohling durch elastisches Expandieren des komprimierten Rohlingsquerschnittes and der Innenseite des Hohlprofils abstützt.

Die Erfindung betrifft schließlich auch eine Vorrichtung zur Durchführung der vorstehenden Verfahren.

Gattungsgemäßer Stand der Technik, der die technischen Merkmale des Oberbegriffs des ersten Anspruchs beschreibt, ist offenbart in FR 2 797 313 A1. Diese Druckschrift betrifft im Einzelnen ein Verfahren zur Herstellung einer Antriebswelle, im Rahmen dessen ein Metallrohr in seinem Innern mit einem faserverstärkten Kunststoffrohr versehen wird. Zum Anordnen des faserverstärkten Kunststoffrohres im Innern des Metallrohres offenbart FR 2 797 313 A1 die Verwendung eines geschlitzten Kunststoffrohres oder die Herstellung einer Presspassung zwischen einem ungeschlitztem Kunststoffrohr und dem Metallrohr.

Im Rahmen eines ersten Verfahrens wird das faserverstärkte Kunststoffrohr mit einem Schlitz versehen. Das sich damit ergebende geschlitzte Kunststoffrohr wird zusammengedrückt und im zusammengedrückten Zustand in das Innere des Metallrohres eingeschoben, auf dessen Innenwand zuvor ein Kunststoff aufgebracht worden ist. Im Innern des Metallrohres wird das geschlitzte Kunststoffrohr druckentlastet. Das Kunststoffrohr weitet sich folglich auf und legt sich an die Innenseite des mit Klebstoff beschichteten Metallrohres an. Das Metallrohr wird anschließend erwärmt und aufgrund der Wärmezufuhr wird das geschlitzte Kunststoffrohr im Innern des Metallrohres mit diesem verklebt.

Alternativ wird ein faserverstärktes Kunststoffrohr, dessen Außendurchmesser größer ist als der Innendurchmesser des Metallrohres, mittels einer Presspassung im Innern des Metallrohres festgelegt. Dabei können die Endabschnitte des Metallrohres, welche den Längsenden des im Innern des Metallrohres angeordneten Kunststoffrohres benachbart sind, durchmesserreduziert werden. Aufgrund der Durchmesserreduzierung ergeben sich an dem Metallrohr Stufen, an denen sich das Kunststoffrohr in Längsrichtung gegen eine unerwünschte Verlagerung abstützt.

Weiterer Stand der Technik ist offenbart in DE 10 2005 005 729 A1. Diese Druckschrift beschreibt ein Verfahren zur Herstellung von Führungsstäben für Linearverschiebungseinheiten, im Rahmen dessen Rohlinge von Vollstäben oder Sandwichstäben aus faserverstärktem Kunststoff in rohrförmige Kanäle von Metall-Hohlprofilen eingezogen werden. Die Stabrohlinge, deren faserverstärkter Kunststoff noch nicht ausgehärtet ist, werden mit einem Rohlingsquerschnitt hergestellt, dessen Form der Querschnittsform der die Stabrohlinge aufnehmenden hohlprofilseitigen Kanäle entspricht und der geringfügig kleiner ist als die betreffenden Kanalquerschnitte. Der Zwischenraum zwischen der Außenseite der im Innern der hohlprofilseitigen Kanäle angeordneten Stabrohlinge und der Innenseite der Kanalwände wird mit einem den jeweiligen Stabrohling begrenzenden Gewebeschlauch und mit Laminierharz ausgefüllt, das vor dem Einführen der Stabrohlinge in die hohlprofilseitigen Kanäle aufgegeben wird.

Die Aufgabe der vorliegenden Erfindung besteht darin, ein Verfahren zum Versteifen eines Hohlprofils, insbesondere eines äußeren Hohlprofils eines Führungsträgers für eine Bewegungseinheit einer Werkzeugmaschine, verfügbar zu machen, das gegenüber dem vorbekannten Verfahren vereinfacht ist und eine Vorrichtung zur Durchführung des vereinfachten Verfahrens bereitzustellen.

Erfindungsgemäß gelöst wird diese Aufgabe durch die Verfahren gemäß den Patentansprüchen 1 sowie durch die Vorrichtung gemäß Patentanspruch 13.

Gemäß Patentanspruch 1 wird der Stabrohling aus noch unverfestigtem faserverstärktem Kunststoff mit einem Rohlingsquerschnitt hergestellt, der gegenüber dem freien Hohlprofilquerschnitt des Hohlprofils, innerhalb dessen der Stabrohling anzuordnen ist, ein Übermaß aufweist. Dieser übergroße Querschnitt des Stabrohlings mit noch unverfestigtem faserverstärktem Kunststoff wird erfindungsgemäß außerhalb des Hohlprofils elastisch derart verformt, dass sich ein komprimierter Rohlingsquerschnitt ergibt, der in der senkrechten Projektion auf den freien Hohlprofilquerschnitt mit dem freien Hohlprofilquerschnitt deckungsgleich ist oder innerhalb des freien Hohlprofilquerschnittes liegt. Mit komprimiertem Rohlingsquerschnitt wird der Stabrohling mit noch unverfestigtem faserverstärktem Kunststoff im Innern des Hohlprofils angeordnet. Aufgrund der elastischen Natur der vorausgegangenen Querschnittsverformung ist der komprimierte Rohlingsquerschnitt des im Innern des Hohlprofils angeordneten Stabrohlings bestrebt, durch Expandieren seine ursprüngliche Form wiederherzustellen. Aufgrund der Querschnittsexpansion nähert sich der Stabrohling mit seiner Außenseite der Innenseite des den Stabrohling umgebenden Hohlprofils an. Die Querschnittsexpansion des Stabrohlings endet, sobald sich die Außenseite des Stabrohlings an der Innenseite des Hohlprofils abstützt. Aufgrund der Querschnittselastizität des Stabrohlings ist der übergroße Rohlingsquerschnitt, welchen der Stabrohling vor seiner Anordnung im Innern des Hohlprofiles aufweist, hinsichtlich seiner Form und/oder seiner Größe weitgehend unabhängig von dem freien Hohlprofilquerschnitt des Hohlprofils und folglich in weiten Grenzen frei wählbar. Dementsprechend gestattet es die Erfindung insbesondere, ungeachtet der Beschaffenheit des freien Hohlprofilquerschnittes für den Stabrohling einen übergroßen Rohlingsquerschnitt zu wählen, der beispielsweise aufgrund seiner Form eine einfache Herstellung des Stabrohlings ermöglicht. Durch die elastische Komprimierung und die anschließende elastische Expansion passt sich der ursprünglich von dem freien Hohlprofilquerschnitt abweichende Rohlingsquerschnitt selbsttätig an den freien Hohlprofilquerschnitt an.

Besondere Ausführungsarten der Erfindung nach den unabhängigen Patentansprüchen 1 und 13 ergeben sich aus den abhängigen Patentansprüchen 2 bis 12.

Im Rahmen der in Patentanspruch 2 beschriebenen Variante des erfindungsgemäßen Verfahrens wird die Elastizität des übergroßen Rohlingsquerschnittes dadurch erzielt, dass faserverstärkter Kunststoff auf einen Träger mit einem elastisch komprimierbaren und elastisch expandierbaren Trägerquerschnitt aufgebracht wird. Die Querschnittselastizität des Stabrohlings beruht demnach auf der Querschnittselastizität des von dem elastisch komprimierbaren und elastisch expandierbaren Träger gebildeten Kerns des Stabrohlings.

Im Interesse einer Realisierung des erfindungsgemäßen Verfahrens mit minimalem Aufwand ist im Falle einer bevorzugten Verfahrensvariante als Träger für den faserverstärkten Kunststoff des Stabrohlings ein elastisch komprimierbarer und elastisch expandierbarer Träger aus Schaumstoff vorgesehen (Patentanspruch 3).

Ausweislich Patentanspruch 4 wird der Stabrohling in weiterer vorteilhafter Ausgestaltung des erfindungsgemäßen Verfahrens mit einem übergroßen Rohlingsquerschnitt hergestellt, dessen Querschnittsform von der Querschnittsform des freien Hohlprofilquerschnittes an dem zu versteifenden Hohlprofil abweicht. Diese Maßnahme empfiehlt sich beispielsweise dann, wenn sich die Herstellung eines Stabrohlings mit einer der Querschnittsform des freien Hohlprofilquerschnittes entsprechenden Querschnittsform aufwändiger gestalten würde als die Herstellung eines Stabrohlings mit der von der Querschnittsform des freien Hohlprofilquerschnittes abweichenden Querschnittsform.

Grundsätzlich besteht erfindungsgemäß die Möglichkeit, die Querschnittsform des Stabrohlings erst im Innern des Hohlprofils an dessen freien Hohlprofilquerschnitt anzupassen. Im Interesse einer Optimierung der Verfahrensabläufe wird erfindungsgemäß aber die Verfahrensweise nach Patentanspruch 5 bevorzugt und die Querschnittsform des übergroßen Rohlingsquerschnittes bereits vor dem Einführen des Stabrohlings in das Hohlprofil an die Querschnittsform des freien Hohlprofilquerschnittes angepasst. Besonders problemlos gestaltet sich das Einführen des Stabrohlings in das Hohlprofil dann, wenn der bezüglich seiner Querschnittsform an die Querschnittsform des freien Hohlprofilquerschnittes angepasste komprimierte Rohlingsquerschnitt kleiner ist als der freie Hohlprofilquerschnitt.

Patentanspruch 6 betrifft eine besonders praxisrelevante Ausgestaltung des erfindungsgemäßen Verfahrens. So besitzen zu versteifende Hohlprofile in einer Vielzahl von Anwendungsfällen einen eckigen, vorzugsweise einen Rechteckquerschnitt. Gleichzeitig lassen sich aber Stabrohlinge mit einem runden Rohlingsquerschnitt einfacher herstellen als Stabrohlinge mit einer eckigen, beispielsweise rechteckigen Querschnittsform. Das Verfahren nach Patentanspruch 6 wird beiden Gegebenheiten gleichermaßen gerecht.

Patentanspruch 7 betrifft die im Zusammenhang mit dem erfindungsgemäßen Verfahren nach Patentanspruch 5 in allgemeiner Form erläuterten Verfahrensschritte bei der Umsetzung im Rahmen der Verfahrensvariante nach Patentanspruch 6.

An die Formgenauigkeit, insbesondere an die Geradheit, von versteiften Hohlprofilen werden häufig außerordentlich strenge Anforderungen gestellt. Dies gilt insbesondere für Führungsträger für Bewegungseinheiten moderner Werkzeugmaschinen. Den Genauigkeitsanforderungen trägt das erfindungsgemäße Verfahren nach Patentanspruch 8 dadurch Rechnung, dass dem in seinem Innern den Stabrohling aufnehmenden Hohlprofil bis zur Verfestigung des faserverstärkten Kunststoffes des Stabrohlings eine Sollform aufgeprägt wird. Bis zur Verfestigung des faserverstärkten Kunststoffes ist der Verbundkörper aus Hohlprofil und Stabrohling insbesondere dann formbar, wenn das Hohlprofil eine geringe Wandstärke aufweist. Aufgrund der erfindungsgemäßen Formgebung während des Herstellungsprozesses erübrigt sich eine ansonsten erforderliche aufwändige Nachbearbeitung des Führungsträgers zumindest weitgehend.

Den Patentansprüchen 9 und 10 sind Varianten des erfindungsgemäßen Verfahrens zu entnehmen, im Rahmen derer der Einheit aus Hohlprofil und Stabrohling mit einfach zu realisierenden Maßnahmen eine Sollform aufgeprägt wird.

Aufgrund seiner hervorragenden Steifigkeit bei gleichzeitig äußerst geringer Masse empfiehlt sich kohlenstofffaserverstärkter Kunststoff als Material für den Kunststoffstab beziehungsweise den Stabrohling des erfindungsgemäß herzustellenden Führungsträgers. Metall eignet sich vor allem aufgrund seiner Verschleißfestigkeit als Werkstoff für das äußere Hohlprofil (Patentanspruch 11). Hohlprofile aus Aluminium zeichnen sich durch besonders vorteilhafte Lauf- oder Gleiteigenschaften bei der Führung der an dem Führungsträger gelagerten Bewegungseinheit bei gleichzeitig geringer Masse aus.

In bevorzugter Ausgestaltung des erfindungsgemäßen Verfahrens wird als Hohlprofil ein äußeres Hohlprofil eines Führungsträgers für eine Bewegungseinheit einer Werkzeugmaschine versteift (Patentanspruch 12).

Nachfolgend wird die Erfindung anhand beispielhafter schematischer Darstellungen näher erläutert. Es zeigen:
- Figur 1: eine Vorrichtung sowie den Ablauf eines mit der Vorrichtung durchgeführten Verfahrens zur Versteifung eines Hohlprofils,
- Figur 2: eine Schnittdarstellung der Anordnung gemäß Figur 1 mit einer Schnittebene, die in Figur 1 senkrecht zu der Zeichenebene und entlang der Linie II-II verläuft,
- Figur 3: eine Schnittdarstellung der Anordnung gemäß Figur 1 mit einer Schnittebene, die in Figur 1 senkrecht zu der Zeichenebene und entlang der Linie III-III verläuft,
- Figur 4: eine Schnittdarstellung der Anordnung gemäß Figur 1 mit einer Schnittebene, die in Figur 1 senkrecht zu der Zeichenebene und entlang der Linie IV-IV verläuft,
- Figur 5: den Vorrichtungsteil 4 gemäß Figur 1 in der stirnseitigen Draufsicht und
- Figur 6: die in Figur 1 enthaltene Schnittdarstellung des Vorrichtungsteils 4.

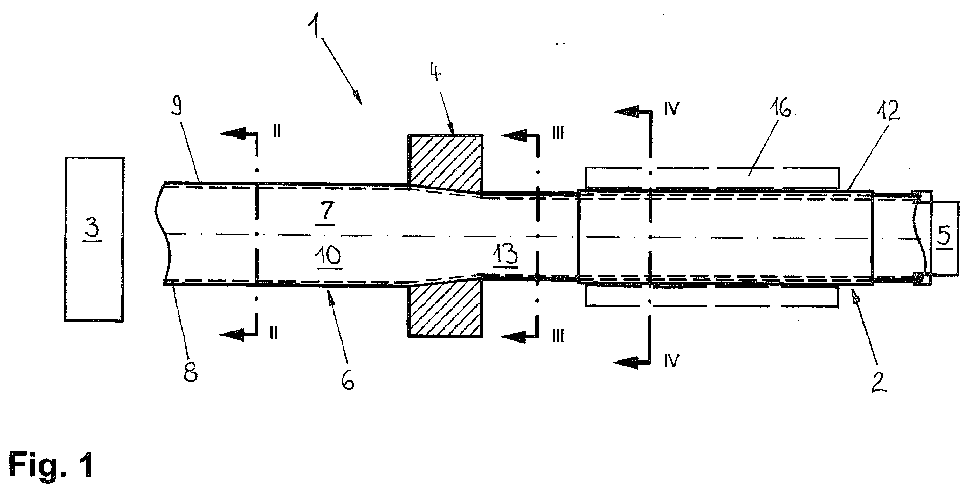

Gemäß Figur 1 umfasst eine Vorrichtung 1 zur Versteifung eines Hohlprofils eines Führungsträgers 2 eine Belegevorrichtung 3, eine Matrize 4 und eine Zugvorrichtung 5. Der Führungsträger 2 ist in dem gezeigten Beispielsfall als Teil einer Linearführung für einen nicht gezeigten Laserbearbeitungskopf einer Laserbearbeitungsmaschine vorgesehen.

Die Belegevorrichtung 3 dient als Vorrichtung zur Herstellung eines Stabrohlings 6. Zu diesem Zweck wird an der Belegevorrichtung 3 auf die Außenseite eines aus Schaumstoff bestehenden stabförmigen Trägers 7 faserverstärkter Kunststoff 8, in dem dargestellten Beispielsfall kohlenstofffaserverstärkter Kunststoff ("CFK"), aufgebracht. In herkömmlicher Weise werden von einem Spulengatter Carbonfaserrovings in der benötigten Anzahl abgezogen, mit Kunstharz getränkt und auf den Umfang des Trägers 7 verteilt. Durch Ziehen des Trägers 7 und der Carbonfasern durch die Belegevorrichtung 3 werden die Carbonfasern unidirektional auf dem Träger 7 abgelegt. Bei ihrer Verarbeitung werden die Carbonfasern geradlinig geführt. Infolge dessen können auch empfindliche Fasern mit sehr hohem E-Modul verarbeitet werden. Gleichzeitig wird auf den mit dem faserverstärkten Kunststoff 8 versehenen Träger 7 ein dünner Gewebeschlauch 9 aus Glasfasergewebe aufgezogen, welcher den aus dem Träger 7 und dem faserverstärkten Kunststoff 8 bestehenden Verbundkörper bis zum Aushärten des faserverstärkten Kunststoffes 8 bzw. des Kunstharzanteils des faserverstärkten Kunststoffs 8 in Form hält.

Anstelle der vorliegend verwendeten Carbonfasern sind auch andersartige Verstärkungsfasern denkbar. Variationsmöglichkeiten bestehen außerdem hinsichtlich des Materials für den Träger 7. In jedem Fall muss das Material für den Träger 7 derart gewählt werden, dass der Trägerquerschnitt des Trägers 7 elastisch komprimiert werden kann und anschließend selbsttätig expandiert.

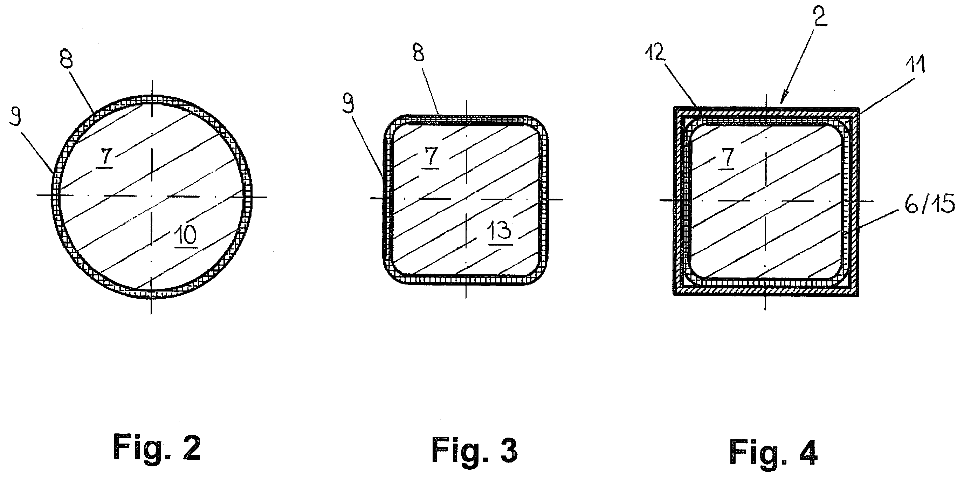

Nach dem Verlassen der Belegevorrichtung 3 besitzt der als Verbundkörper aus dem Träger 7, dem noch nicht verfestigten faserverstärkten Kunststoff 8 und dem Gewebeschlauch 9 bestehende Stabrohling 6 einen in Figur 2 im Einzelnen dargestellten kreisförmigen Rohlingsquerschnitt 10. Sowohl bezüglich seiner Form als auch bezüglich seiner Größe weicht der Rohlingsquerschnitt 10 des Stabrohlings 6 von einem freien Hohlprofilquerschnitt 11 im Inneren eines Hohlprofils ab, das in dem dargestellten Beispielsfall als äußeres Hohlprofil 12 des Führungsträgers 2 vorgesehen ist.

Bei dem äußeren Hohlprofil 12 handelt es sich um ein dünnwandiges quadratisches Vierkantrohr aus Aluminium (Figur 4). An dem fertigen Führungsträger 2 wird das zu führende Bauteil, vorliegend der zu führende Laserbearbeitungskopf, an der Außenseite des äußeren Hohlprofils 12 gelagert und in dessen Längsrichtung bewegt. In der senkrechten Projektion auf den freien Hohlprofilquerschnitt 11 erstreckt sich der Rohlingsquerschnitt 10 über den freien Hohlprofilquerschnitt 11 hinaus. Insofern handelt es sich bei dem Rohlingsquerschnitt 10 um einen übergroßen Rohlingsquerschnitt.

Mittels der Matrize 4 wird der übergroße Rohlingsquerschnitt 10 zu einem komprimierten Rohlingsquerschnitt 13 verformt, der in der senkrechten Projektion auf den freien Hohlprofilquerschnitt 11 innerhalb des freien Hohlprofilquerschnittes 11 liegt. Zu diesem Zweck wird der Stabrohling 6 nach dem Verlassen der Belegevorrichtung 3 mittels der eine Transfervorrichtung bildenden Zugvorrichtung 5 bei nach wie vor nicht verfestigtem faserverstärkten Kunststoff 8 durch die Matrize 4 hindurchgezogen.

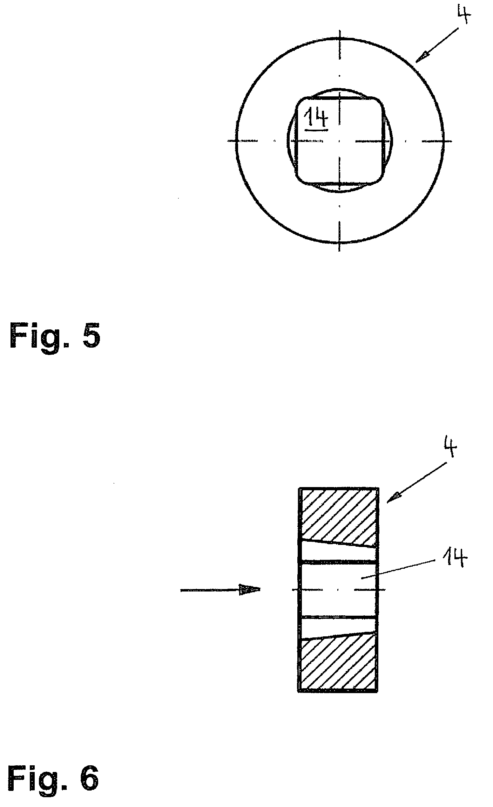

Gemäß den Figuren 5 und 6 besitzt die Matrize 4 eine in Zugrichtung (Pfeil in Figur 6) des Stabrohlings 6 konisch zulaufende Matrizenöffnung 14, die an der Austrittsseite eine in etwa der Querschnittsform des freien Hohlprofilquerschnittes 11 entsprechende, annähernd quadratische Querschnittsform aufweist.

Der mit Hilfe der als Vorrichtung zur Komprimierung des übergroßen Rohlingsquerschnittes 10 vorgesehenen Matrize 4 erzeugte komprimierte Rohlingsquerschnitt 13 des Stabrohlings 6 ist geringfügig kleiner als der freie Hohlprofilquerschnitt 11 an dem äußeren Hohlprofil 12. Infolge dessen kann der Stabrohling 6 nach dem Verlassen der Matrize 4 mittels der Zugvorrichtung 5 problemlos in das Innere des äußeren Hohlprofils 12 eingezogen werden. Ist der Stabrohling 6 im Innern des äußeren Hohlprofils 12 angeordnet, hat sich also die in Figur 1 veranschaulichte Situation ergeben, so endet die mittels der Zugvorrichtung 5 bewirkte Bewegung des Stabrohlings 6 und der Stabrohling 6 wird an der Eintrittsseite des äußeren Hohlprofils 12 von dem zu der Matrize 4 hin gelegenen Strang abgetrennt.

Der zuvor elastisch komprimierte Träger 7 des im Innern des äußeren Hohlprofils 12 angeordneten Stabrohlings 6 expandiert nun selbsttätig. Aufgrund der Querschnittsexpansion des Stabrohlings 6 legt sich dieser an die Innenseite des äußeren Hohlprofils 12 an und füllt den freien Hohlprofilquerschnitt 11 nahezu vollständig aus (Figur 4). Durch Aushärten des faserverstärkten Kunststoffs 8 entsteht aus dem Stabrohling 6 ein Kunststoffstab 15, der ungeachtet einer geringen Masse eine sehr hohe Steifigkeit besitzt. Durch entsprechende Merkmale zeichnet sich der von dem Kunststoffstab 15 und dem dünnwandigen äußeren Hohlprofil 12 gebildeter Führungsträger 2 aus, welchem der Kunststoffstab 15 die erforderliche Steifigkeit und das äußere Hohlprofil 12 die erforderliche Verschleißfestigkeit verleiht. An dem fertigen Führungsträger 2 sind Überstände des Kunststoffstabes 15 gegenüber dem äußeren Hohlprofil 12 entfernt.

Solange der faserverstärkte Kunststoff 8 des im Innern des äußeren Hohlprofils 12 angeordneten Stabrohlings 6 nicht ausgehärtet ist, kann der Verbundkörper aus Stabrohling 6 und äußerem Hohlprofil 12 mit geringem Kraftaufwand gerichtet werden, um auf diese Art und Weise die für den Führungsträger 2 unerlässliche Geradheit zu gewährleisten. Zum Richten von Stabrohling 6 und äußerem Hohlprofil 12 dient eine in Figur 1 angedeutete Form 16, die in dem dargestellten Beispielsfall als optionaler Vorrichtungsteil der Vorrichtung 1 vorgesehen ist. Die als Lagerfläche für den zu führenden Laserbearbeitungskopf vorgesehene Oberfläche des äußeren Hohlprofils 12 kann erforderlichenfalls einer ihrer Funktion entsprechenden Nachbearbeitung unterzogen werden.

Anstelle des zur Führung von Komponenten, insbesondere eines Laserbearbeitungskopfes, einer Werkzeugmaschine dienenden Führungsträgers 2 können nach dem beschriebenen Verfahren auch Tragstrukturen für andere Anwendungen hergestellt werden. In diesem Zusammenhang zu nennen sind beispielsweise Träger zur Lagerung von Einrichtungen der Medizintechnik.

## Patentansprüche

1. Verfahren zum Versteifen eines Hohlprofils (12) mittels eines sich im Innern des Hohlprofils (12) in dessen Längsrichtung erstreckenden Kunststoffstabes (15) aus einem verfestigtem faserverstärkten Kunststoff (8),
• wobei ein Stabrohling (6) des Kunststoffstabes (15) mit noch unverfestigtem faserverstärktem Kunststoff (8) und mit einem übergroßen Rohlingsquerschnitt (10) hergestellt wird, der sich in der senkrechten Projektion auf den freien Hohlprofilquerschnitt (11) über den freien Hohlprofilquerschnitt (11) hinaus erstreckt und der elastisch komprimierbar und nach dem elastischen Komprimieren elastisch expandierbar ist,
• wobei der übergroße Rohlingsquerschnitt (10) des Stabrohlings (6) außerhalb des Hohlprofils (12) elastisch auf einen komprimierten Rohlingsquerschnitt (13) komprimiert wird, der in der senkrechten Projektion auf den freien Hohlprofilquerschnitt (11) mit dem freien Hohlprofilquerschnitt (11) deckungsgleich ist oder innerhalb des freien Hohlprofilquerschnittes (11) liegt,
• wobei der Stabrohling (6) mit komprimiertem Rohlingsquerschnitt (13) innerhalb des freien Hohlprofilquerschnittes (11) im Innern des Hohlprofils (12) angeordnet wird und
• wobei sich der im Innern des Hohlprofils (12) angeordnete Stabrohling (6) durch elastisches Expandieren des komprimierten Rohlingsquerschnittes (13) an der Innenseite des Hohlprofils (12) abstützt, **dadurch gekennzeichnet,**
• **dass** der übergroße Rohlingsquerschnitt (10) des Stabrohlings (6) außerhalb des Hohlprofils (12) mit noch unverfestigtem faserverstärktem Kunststoff elastisch auf einen komprimierten Rohlingsquerschnitt (13) komprimiert wird,
• **dass** der Stabrohling (6) mit komprimiertem Rohlingsquerschnitt (13) und noch unverfestigtem faserverstärktem Kunststoff innerhalb des freien Hohlprofilquerschnittes (11) im Innern des Hohlprofils (12) angeordnet wird und
• **dass** sich der faserverstärkte Kunststoff (8) des im Innern des Hohlprofils angeordneten und durch elastisches Expandieren des komprimierten Rohlingsquerschnittes (13) an der Innenseite des Hohlprofils (12) abgestützten Stabrohlings (6) unter Ausbildung des Kunststoffstabes (15) verfestigt.

2. Verfahren nach Anspruch 1, **dadurch gekennzeichnet, dass** der Stabrohling (6) mit einem übergroßen Rohlingsquerschnitt (10) hergestellt wird, indem faserverstärkter Kunststoff (8) auf einen Träger (7) mit einem elastisch komprimierbaren und elastisch expandierbaren Trägerquerschnitt aufgebracht wird.

3. Verfahren nach einem der vorhergehenden Ansprüche, **dadurch gekennzeichnet, dass** der Stabrohling (6) mit einem übergroßen Rohlingsquerschnitt (10) hergestellt wird, indem faserverstärkter Kunststoff (8) auf einen Träger (7) aus Schaumstoff mit einem elastisch komprimierbaren und elastisch expandierbaren Trägerquerschnitt aufgebracht wird.

4. Verfahren nach einem der vorhergehenden Ansprüche, **dadurch gekennzeichnet, dass** der Stabrohling (6) mit einem übergroßen Rohlingsquerschnitt (10) hergestellt wird, dessen Querschnittsform von der Querschnittsform des freien Hohlprofilquerschnittes (11) abweicht, innerhalb dessen der Stabrohling (6) im Innern des Hohlprofils (12) angeordnet wird.

5. Verfahren nach einem der vorhergehenden Ansprüche, **dadurch gekennzeichnet, dass** der übergroße Rohlingsquerschnitt (10) mit der von der Querschnittsform des freien Hohlprofilquerschnittes (11) abweichenden Querschnittsform außerhalb des Hohlprofils (12) auf einen komprimierten Rohlingsquerschnitt (13) komprimiert wird, dessen Querschnittsform der Querschnittsform des freien Hohlprofilquerschnittes (11) entspricht, ehe der Stabrohling (6) mit komprimiertem Rohlingsquerschnitt (13) innerhalb des freien Hohlprofilquerschnittes (11) im Innern des Hohlprofils (12) angeordnet wird.

6. Verfahren nach einem der vorhergehenden Ansprüche, **dadurch gekennzeichnet, dass** der Stabrohling (6) mit einem übergroßen Rohlingsquerschnitt (10) mit runder Querschnittsform hergestellt wird und dass der Stabrohling (6) im Innern des Hohlprofils (12) innerhalb eines freien Hohlprofilquerschnittes (11) mit eckiger Querschnittsform angeordnet wird.

7. Verfahren nach einem der vorhergehenden Ansprüche, **dadurch gekennzeichnet, dass** der übergroße Rohlingsquerschnitt (10) mit runder Querschnittsform außerhalb des Hohlprofils (12) auf einen komprimierten Rohlingsquerschnitt (13) mit eckiger Querschnittsform komprimiert wird, ehe der Stabrohling (6) mit komprimiertem Rohlingsquerschnitt (13) innerhalb des freien Hohlprofilquerschnittes (11) mit eckiger Querschnittsform im Innern des Hohlprofils (12) angeordnet wird.

8. Verfahren nach einem der vorhergehenden Ansprüche, **dadurch gekennzeichnet, dass** dem in seinem Innern den Stabrohling (6) aufnehmenden Hohlprofil (12) bis zur Verfestigung des faserverstärkten Kunststoffes (8) des Stabrohlings (6) eine Sollform aufgeprägt wird.

9. Verfahren nach einem der vorhergehenden Ansprüche, **dadurch gekennzeichnet, dass** dem in seinem Innern den Stabrohling (6) aufnehmenden Hohlprofil (12) eine Sollform aufgeprägt wird, indem das Hohlprofil (12) bis zur Verfestigung des faserverstärkten Kunststoffes (8) des Stabrohlings (6) an seiner Außenseite formgebend beaufschlagt wird.

10. Verfahren nach einem der vorhergehenden Ansprüche, **dadurch gekennzeichnet, dass** das in seinem Innern den Stabrohling (6) aufnehmende Hohlprofil (12) bis zur Verfestigung des faserverstärkten Kunststoffes (8) des Stabrohlings (6) an seiner Außenseite formgebend beaufschlagt wird, indem das Hohlprofil (12) in eine entsprechende Form (16) eingelegt wird.

11. Verfahren nach einem der vorhergehenden Ansprüche, **dadurch gekennzeichnet, dass** der Kunststoffstab (15) aus kohlenstofffaserverstärktem Kunststoff hergestellt wird und/oder dass als Hohlprofil (12) ein Hohlprofil aus Metall, vorzugsweise aus Aluminium, vorgesehen wird.

12. Verfahren nach einem der vorhergehenden Ansprüche, **dadurch gekennzeichnet, dass** als Hohlprofil (12) ein äußeres Hohlprofil eines Führungsträgers (2) für eine Bewegungseinheit einer Werkzeugmaschine versteift wird, wobei der Führungsträger (2) an seiner Außenseite mit einer von dem äußeren Hohlprofil ausgebildeten Lagerfläche versehen ist, an welcher die mittels des Führungsträgers (2) zu führende Bewegungseinheit an dem Führungsträger (2) lagerbar ist.

13. Vorrichtung zur Durchführung des Verfahrens nach einem der vorhergehenden Ansprüche,
**gekennzeichnet durch**
• eine Vorrichtung (3) zur Herstellung des Stabrohlings (6) mit einem übergroßen Rohlingsquerschnitt (10) und mit noch unverfestigtem faserverstärktem Kunststoff (8),
• eine Vorrichtung (4) zur Komprimierung des übergroßen Rohlingsquerschnitts (10) des Stabrohlings (6) mit noch unverfestigtem faserverstärktem Kunststoff (8) auf den komprimierten Rohlingsquerschnitt (13) sowie
• eine Transfervorrichtung (5) zur Anordnung des Stabrohlings (6) mit komprimiertem Rohlingsquerschnitt (13) und noch unverfestigtem faserverstärktem Kunststoff (8) im Innern des Hohlprofils (12), gegebenenfalls des äußeren Hohlprofils.

## Claims

1. Method for reinforcing a hollow section (12) by means of a plastic rod (15) made from a hardened fibre-reinforced plastic (8) extending on the inside of the hollow section (12) and longitudinally thereof,
• wherein a rod blank (6) of the plastic rod (15) is made with not yet hardened fibre-reinforced plastic (8) and with an oversized blank cross-section (10), which extends in the vertical projection on the free hollow section cross-section (11) beyond the free hollow section cross-section (11) and which is elastically compressible and elastically expandable after the elastic compression,
• wherein the oversized blank cross-section (10) of the rod blank (6) is elastically compressed outside the hollow section (12) to become a compressed blank cross-section (13), which in the vertical projection on the free hollow section cross-section (11) is congruent with the free hollow section cross-section (11) or lies within the free hollow section cross-section (11),
• wherein the rod blank (6) with compressed blank cross-section (13) is arranged within the free hollow section cross-section (11) in the inner space of the hollow section (12) and
• wherein the rod blank (6) arranged in the inner space of the hollow section (12) is supported due to elastic expansion of the compressed blank cross-section (13) on the inside of the hollow section (12), **characterised in that**,
• the oversized blank cross-section (10) of the rod blank (6) with not yet hardened fibre-reinforced plastic is elastically compressed, outside the hollow section (12) to become a compressed blank cross-section (13)
• the rod blank (6) with compressed blank cross-section (13) and not yet hardened fibre-reinforced plastic is arranged within the free hollow section cross-section (11) in the inner space of the hollow section (12) and
• that the fibre-reinforced plastic (8) of the rod blank (6) arranged in the inner space of the hollow section and supported due to elastic expansion of the compressed blank cross-section (13) on the inside of the hollow section (12) is hardened thus forming the plastic rod (15)

2. Method according to claim 1, **characterised in that** the rod blank (6) with an oversized blank cross-section (10) is made by applying fibre-reinforced plastic (8) to a carrier (7) with an elastically compressible and elastically expandable carrier cross-section.

3. Method according to any of the preceding claims, **characterised in that** the rod blank (6) with an oversized blank cross-section (10) is made by applying fibre-reinforced plastic (8) to a carrier (7) made of foam and having an elastically compressible and elastically expandable carrier cross-section.

4. Method according to any of the preceding claims, **characterised in that** the rod blank (6) is made with an oversized blank cross-section (10), the cross-sectional shape of which differs from the cross-sectional shape of the free hollow section cross-section (11), within which the rod blank (6) is arranged in the inner space of the hollow section (12).

5. Method according to any of the preceding claims, **characterised in that** the oversized blank cross-section (10) having the cross-sectional shape which differs from the cross-sectional shape of the free hollow section cross-section (11) is compressed outside the hollow section (12) to become a compressed blank cross-section (13), the cross-sectional shape of which corresponds to the cross-sectional shape of the free hollow section cross-section (11), before the rod blank (6) with compressed blank cross-section (13) is arranged within the free hollow section cross-section (11) in the inner space of the hollow section (12).

6. Method according to any of the preceding claims, **characterised in that** the rod blank (6) with an oversized blank cross-section (10) is made with a round cross-sectional shape and that the rod blank (6) is arranged in the inner space of the hollow section (12) within a free hollow section cross-section (11) with an angular cross-sectional shape,

7. Method according to any of the preceding claims, **characterised in that** the oversized blank cross-section (10) with a round cross-sectional shape is compressed outside the hollow section (12) to become a compressed blank cross-section (13), before the rod blank (6) with compressed blank cross-section (13) is arranged within the free hollow section cross-section (11) with an angular cross-sectional shape in the inner space of the hollow section (12).

8. Method according to any of the preceding claims, **characterised in that** on the hollow section (12) receiving the rod blank (6) in its inner space a desired shape is imposed up to the hardening of the fibre-reinforced plastic (8) of the rod blank (6).

9. Method according to any of the preceding claims, **characterised in that** on the hollow section (12) receiving the rod blank (6) in its inner space, a desired shape is imposed by acting upon the outside of the hollow section (12) in a shaping manner up to the hardening of the fibre-reinforced plastic (8) of the rod blank (6).

10. Method according to any of the preceding claims, **characterised in that** the hollow section (12) receiving the rod blank (6) in its inner space is acted upon on the outside thereof in a shaping manner up to the hardening of the fibre-reinforced plastic (8) of the rod blank (6) by inserting the hollow section (12) into a corresponding mold (16).

11. Method according to any of the preceding claims, **characterised in that** the plastic rod (15) is made of carbon fibre-reinforced plastic and/or that, as hollow section (12), a hollow section made of metal, preferably aluminum, is provided.

12. Method according to any of the preceding claims, **characterised in that**, as hollow section (12), an external hollow section of a guide carrier (2) for a motion unit on a machine tool is reinforced, wherein the guide carrier (2) is provided on its outer side with a supporting surface formed by the external hollow section, on which supporting surface the motion unit to be guided by the guide carrier (2) can be supported on the guide carrier (2).

13. Device for carrying out the method according to any of the preceding claims, **characterised by**
• a device (3) to manufacture the rod blank (6) with an oversized blank cross-section (10) and with not yet hardened fibre-reinforced plastic (8),
• a device (4) to compress the oversized blank cross-section (10) of the rod blank (6) with not yet hardened fibre-reinforced plastic (8) to become the compressed blank cross-section (13) and
• a transfer device (5) for arranging the rod blank (6) with compressed blank cross-section (13) and not yet hardened fibre-reinforced plastic (8) in the inner space of the hollow section (12), where applicable in the inner space of the external hollow section.

## Revendications

1. Procédé de renforcement d'un profilé creux (12) au moyen d'une barre en matière plastique (15), constituée d'une matière plastique (8) renforcée par fibres et solidifiée, s'étendant à l'intérieur du profilé creux (12) dans la direction longitudinale de celui-ci,
- sachant qu'une ébauche de barre (6) de la barre en matière plastique (15) est fabriquée avec une matière plastique (8) renforcée par fibres non encore solidifiée et avec une section d'ébauche surdimensionnée (10) qui s'étend, en projection verticale sur la section libre (11) du profilé creux, au-delà de la section libre (11) de profilé creux, et qui peut être comprimée élastiquement et connaître une expansion élastique à la suite de la compression élastique,
- sachant que la section d'ébauche surdimensionnée (10) de l'ébauche de barre (6) est, à l'extérieur du profilé creux (12), comprimée élastiquement sur une section d'ébauche comprimée (13) qui, en projection verticale sur la section libre (11) de profilé creux, est coïncidente avec la section libre (11) de profilé creux ou se situe à l'intérieur de la section libre (11) de profilé creux,
- sachant que l'ébauche de barre (6) avec la section d'ébauche comprimée (13) à l'intérieur de la section libre (11) de profilé creux est disposée à l'intérieur du profilé creux (12),
- et sachant que l'ébauche de barre (6) disposée à l'intérieur du profilé creux (12) s'appuie contre le côté intérieur du profilé creux (12) par expansion élastique de la section d'ébauche comprimée (13),
**caractérisé**
- **en ce que** la section d'ébauche surdimensionnée (10) de l'ébauche de barre (6) est, à l'extérieur du profilé creux (12), avec la matière plastique renforcée par fibres non encore solidifiée, comprimée élastiquement sur une section d'ébauche comprimée (13),
- **en ce que** l'ébauche de barre (6) avec la section d'ébauche comprimée (13) et la matière plastique renforcée par fibres non encore solidifiée à l'intérieur de la section libre (11) de profilé creux est disposée à l'intérieur du profilé creux (12),
- et **en ce que** la matière plastique (8) renforcée par fibres de l'ébauche de barre (6) disposée à l'intérieur du profilé creux et appuyée contre le côté intérieur du profilé creux (12) par expansion élastique de la section d'ébauche comprimée (13) se solidifie en formant la barre en matière plastique (15).

2. Procédé selon la revendication 1, **caractérisé en ce que** l'ébauche de barre (6) est fabriquée avec une section d'ébauche surdimensionnée (10) par le fait qu'une matière plastique (8) renforcée par fibres est appliquée sur un support (7) ayant une section de support pouvant être comprimée élastiquement et connaissant une expansion élastique.

3. Procédé selon l'une des revendications précédentes, **caractérisé en ce que** l'ébauche de barre (6) est fabriquée avec une section d'ébauche surdimensionnée (10) par le fait qu'une matière plastique (8) renforcée par fibres est appliquée sur un support (7) en matière alvéolaire ayant une section de support pouvant être comprimée élastiquement et connaissant une expansion élastique.

4. Procédé selon l'une des revendications précédentes, **caractérisé en ce que** l'ébauche de barre (6) est fabriquée avec une section d'ébauche surdimensionnée (10) dont la forme de section diffère de la forme de section de la section libre (11) de profilé creux à l'intérieur de laquelle est disposée l'ébauche de barre (6) à l'intérieur du profilé creux (12).

5. Procédé selon l'une des revendications précédentes, **caractérisé en ce que** la section d'ébauche surdimensionnée (10) avec la forme de section différant de la forme de section de la section libre (11) de profilé creux est, à l'extérieur du profilé creux (12), comprimée sur une section d'ébauche comprimée (13) dont la forme de section correspond à la forme de section de la section libre (11) de profilé creux, avant que l'ébauche de barre (6) avec la section d'ébauche comprimée (13) à l'intérieur de la section libre (11) de profilé creux soit disposée à l'intérieur du profilé creux (12).

6. Procédé selon l'une des revendications précédentes, **caractérisé en ce que** l'ébauche de barre (6) avec une section d'ébauche surdimensionnée (10) est fabriquée avec une forme de section ronde, et **en ce que** l'ébauche de barre (6) est disposée à l'intérieur du profilé creux (12) à l'intérieur d'une section libre (11) de profilé creux ayant une forme de section polygonale.

7. Procédé selon l'une des revendications précédentes, **caractérisé en ce que** la section d'ébauche surdimensionnée (10) ayant une forme de section ronde est, à l'extérieur du profilé creux (12), comprimée sur une section d'ébauche comprimée (13) ayant une forme de section polygonale, avant que l'ébauche de barre (6) avec la section d'ébauche comprimée (13) soit disposée à l'intérieur de la section libre (11) de profilé creux ayant une forme de section polygonale à l'intérieur du profilé creux (12).

8. Procédé selon l'une des revendications précédentes, **caractérisé en ce qu'**une forme de consigne est imprimée au profilé creux (12) recevant à l'intérieur de lui-même l'ébauche de barre (6), jusqu'à la solidification de la matière plastique (8) renforcée par fibres de l'ébauche de barre (6).

9. Procédé selon l'une des revendications précédentes, **caractérisé en ce qu'**une forme de consigne est imprimée au profilé creux (12) recevant à l'intérieur de lui-même l'ébauche de barre (6) par le fait que le profilé creux (12) est, jusqu'à la solidification de la matière plastique (8) renforcée par fibres de l'ébauche de barre (6), sollicité sur son côté extérieur de manière à lui donner une forme.

10. Procédé selon l'une des revendications précédentes, **caractérisé en ce que** le profilé creux (12) recevant à l'intérieur de lui-même l'ébauche de barre (6) est, jusqu'à la solidification de la matière plastique (8) renforcée par fibres de l'ébauche de barre (6), sollicité sur son côté extérieur de manière à lui donner une forme par le fait que le profilé creux (12) est inséré dans un moule correspondant (16).

11. Procédé selon l'une des revendications précédentes, **caractérisé en ce que** la barre en matière plastique (15) est fabriquée à partir d'une matière plastique renforcée par des fibres de carbone, et/ou **en ce qu'**il est prévu comme profilé creux (12) un profilé creux en métal, de préférence en aluminium.

12. Procédé selon l'une des revendications précédentes, **caractérisé en ce qu'**on renforce comme profilé creux (12) un profilé creux extérieur d'un support de guidage (2) pour une unité de déplacement d'une machine-outil, sachant que le support de guidage (2) est pourvu sur son côté extérieur d'une surface de palier formée par le profilé creux extérieur, sur laquelle l'unité de déplacement à guider au moyen du support de guidage (2) peut être supportée sur le support de guidage (2).

13. Dispositif pour la mise en oeuvre du procédé selon l'une des revendications précédentes, **caractérisé par**
- un dispositif (3) de fabrication de l'ébauche de barre (6) avec une section d'ébauche surdimensionnée (10) et avec une matière plastique (8) renforcée par fibres non encore solidifiée,
- un dispositif (4) pour comprimer la section d'ébauche surdimensionnée (10) de l'ébauche de barre (6) avec la matière plastique (8) renforcée par fibres non encore solidifiée sur la section d'ébauche comprimée (13),
- et un dispositif de transfert (5) pour disposer l'ébauche de barre (6) avec la section d'ébauche comprimée (13) et la matière plastique (8) renforcée par fibres non encore solidifiée à l'intérieur du profilé creux (12), le cas échéant du profilé creux extérieur.
